# EUROPEAN PATENT APPLICATION

(11) **EP 2 390 173 A1**
(43) Date of publication of application: **30.11.2011**
(21) Application number: 10462004.2
(22) Date of filing: 27.05.2010
(51) Int. Cl.: B63H 9/04, B63H 21/17, B63H 21/20

(54) **Electric sailboat**

(71) Applicant: Magma Int. Inc., Belize City (BZ)
(72) Inventor: Szabo, Gabor, 1182 Budapest (HU)
(74) Representative: Kacsuk, Zsófia

(57) **Abstract**

The invention relates to a sailboat having a hull, a mast, a keel, characterised in that the sailboat is provided with an electric motor driven propeller, and the keel comprises an inner cavity wherein at least one battery is sealed off, and the battery is electronically connected to the electric motor.

The invention further relates to such a keel for housing at least one battery.

## Description

The present invention relates to a sailboat having a hull, a mast and a keel. The invention further relates to a keel.

The increasing problem of pollution, global warming has directed the attention towards ecologically beneficial (antipollution) power sources. Furthermore the gradual depletion of non-renewable energy sources (such as gas or oil) has led to an increased need of exploiting renewable energy sources such as sun, wind, tides, etc.

One of the fields of interest is the reduction of pollution caused by sailboats. Although sailboats mainly make use of the force that the wind transfers to the sails, however, in certain instances additional propelling force is required. Most sailboats are equipped with marine engines (mostly diesel motors) for the case the wind dies down and the sailboat must be propelled to the harbour, as well as for navigating in and out of the harbour. The marine engines - often illegal - are among the highest contributors to air and water pollution in many areas of the world, hence a more ecological solution would be desirable for propelling sailboats in calm or when the navigation space is too small for making use of the natural wind propulsion.

Various attempts have been made to overcome the aforementioned problem. On a state and intergovernmental level emission standards have been established in order to decrease the pollution rate. Other attempts are directed specifically to providing sailboats with antipollution engine drive. Hybrid sailboats have been proposed wherein the sail force is supplemented by an electric engine driving a propeller. The electric engine uses batteries, which can be recharged from shore-side power when available. However, shore-based power stations are subject to much stricter environmental controls than the average marine diesel or outboard motor, also many harbours are not equipped with such power stations thus limiting the territorial applicability of electric engines. As an alternative to shore-based power recharge it has been proposed to provide solar panels in the deck, cabin roof or as awnings providing constant green power supply to the electric engine. Nevertheless solar power is no option for assisting propulsion in cloudy whether or after sunset. Also the efficiency of solar panels rapidly decreases when they are not pointed directly at the sun, hence the solar panels need to be provided with tilting mechanics which makes their application more expensive. Another possibility is to use the electric motor as a generator when boat speed increases and the propeller is forced to turn faster, whereby the motor acting as a generator sends back electricity which can be used to recharge the batteries. The drawback of this solution is that recharging only occurs in good wind conditions, hence a relatively high number of batteries are needed for the case the wind suddenly dies down far from the shore.

A common drawback of all the aforementioned solutions is that the required batteries are stored in the hull of the sailboat taking up a lot of precious space and possibly making the boat instable if it is tilted by the waves or wind.

It is an object of the present invention to overcome the drawbacks associated with the prior art. In particular it is an object of the present invention to resolve the problem of storing the batteries of an electric engine. It is a further object of the present invention to provide a more reliable way of recharging the batteries.

The above objects are achieved by a sailboat having a hull, a mast, a keel, characterised in that the sailboat is provided with an electric motor driven propeller, and the keel comprises an inner cavity wherein at least one battery is sealed off, and the battery is electronically connected to the electric motor.

By providing the batteries in the keel of the sailboat more space is available in the hull, moreover the stability of the sailboat is increased by arranging the heavy (e.g. lead) batteries as deep down in the boat as possible - which is the keel. Increased stability results in increased speed as well. The keel can house a plurality of batteries, whereby sufficient electric energy can be stored for the interval when recharging is not possible.

In a preferred embodiment a wind turbine is arranged on the mast, which is in driving connection with a generator arranged on the sailboat and the at least one battery is electrically connected to the generator allowing charging of the at least one battery. The wind turbine is preferably of a vertical axis design.

The generator is preferably arranged at deck level or below the deck. However, in another preferred embodiment the generator and the wind turbine are built together to form a wind generator. In this case the wind generator comprise a rotor and a stator, the rotor supports a plurality of coils and the stator is formed as a ring iron core.

Sailboats are primarily used on windy days; hence a wind turbine is nearly always able to charge the batteries (unlike solar power). Furthermore, a wind turbine may be left to operate when the sailboat is docked in the harbour unlike generators that rely on the motion of the sailboat.

In a second aspect the invention provides a sailboat keel for housing at least one battery, wherein the keel comprises an inner cavity wherein at least one battery is sealed off, and the at least one battery can be electronically connected to an electric motor.

In a preferred embodiment the at least one battery includes a plurality of such batteries connected in series such that the individual batteries or groups thereof can be selectively by-passed for selectively charging and discharging the individual batteries or groups thereof.

Further advantageous embodiments of the invention are defined in the attached dependent claims.

Further details of the invention will be apparent from the accompanying figures and exemplary embodiments.

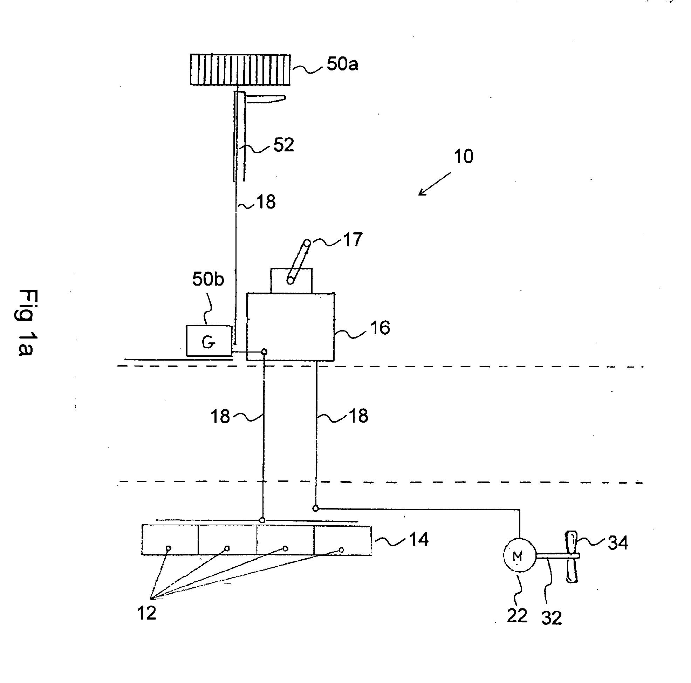

Fig. 1a is a schematic diagram of a preferred embodiment of the sailboat according to the invention.
Fig. 1 b is a schematic diagram of another preferred embodiment of the sailboat according to the invention.
Fig. 2 is a partial cross-sectional side view of a first preferred embodiment of the keel.
Fig. 3 is a schematic back view of the keel and propeller of the embodiment illustrated in Fig. 2.
Fig. 4 is a cross-sectional side view of a second preferred embodiment of the keel according to the invention.
Fig. 5 is a back view of the keel and propeller arrangement according to Fig. 4.
Fig. 6 is a partial cross-sectional side view of a third preferred embodiment of the keel with a different arrangement of the propeller.
Fig. 7 is a schematic back view of the keel and propeller arrangement of the embodiment illustrated in Fig. 6.
Fig. 8 is a schematic side view of a wind generator arranged on the mast of the sailboat illustrated in Fig. 1 b.
Fig. 9 is a top plan view of the wind generator and mast illustrated in Fig. 8.
Fig. 10 is a schematic side view of a wind turbine mounted on the mast of the sailboat illustrated in Fig. 1a.
Fig. 11 is a top plan view of the wind turbine and mast illustrated in Fig. 10.

Fig. 1a schematically illustrates a first preferred embodiment of the sailboat 10 in accordance with the present invention. The sailboat 10 comprises a plurality of batteries 12, which are arranged in a cavity of the keel 14 of the sailboat 10 as will be described in more detail later on. The batteries 12 are connected in series such that the individual batteries or groups thereof can be selectively by-passed for selectively charging and discharging the individual batteries 12 or groups thereof.

The batteries 12 are connected to a control unit 16 by electrical wiring 18 running within a console supporting the keel 14. The control unit 16 is arranged within or above the hull 20 (i.e. below or above deck level) and is accessible (directly or remotely) to the user of the sailboat 10.

The batteries 12 are also connected to an electric motor 22 which is provided for driving a propeller 24 in order to propel the sailboat 10 when wind power is insufficient or cannot be made use of at all. The batteries 12 and the electric motor 22 are preferably connected with the interposition of a control unit 16 having a reverse gear 17 for controlling the direction of propulsion.

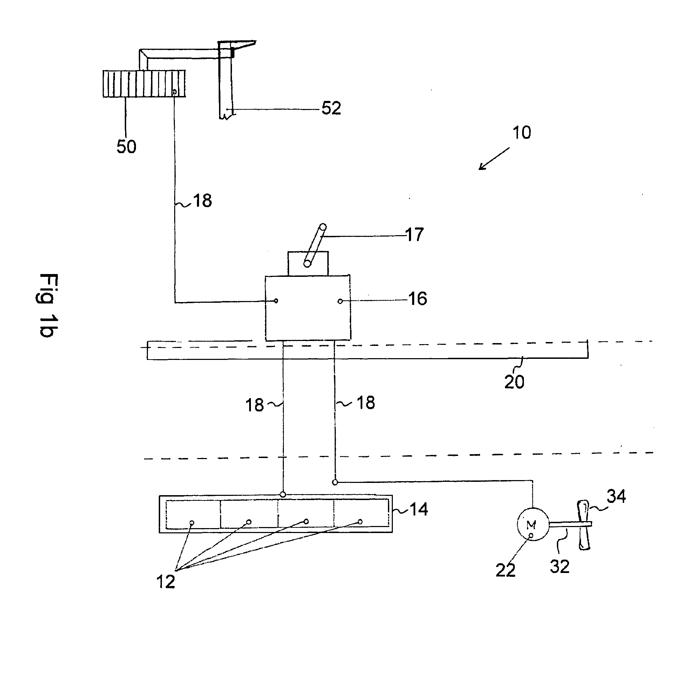

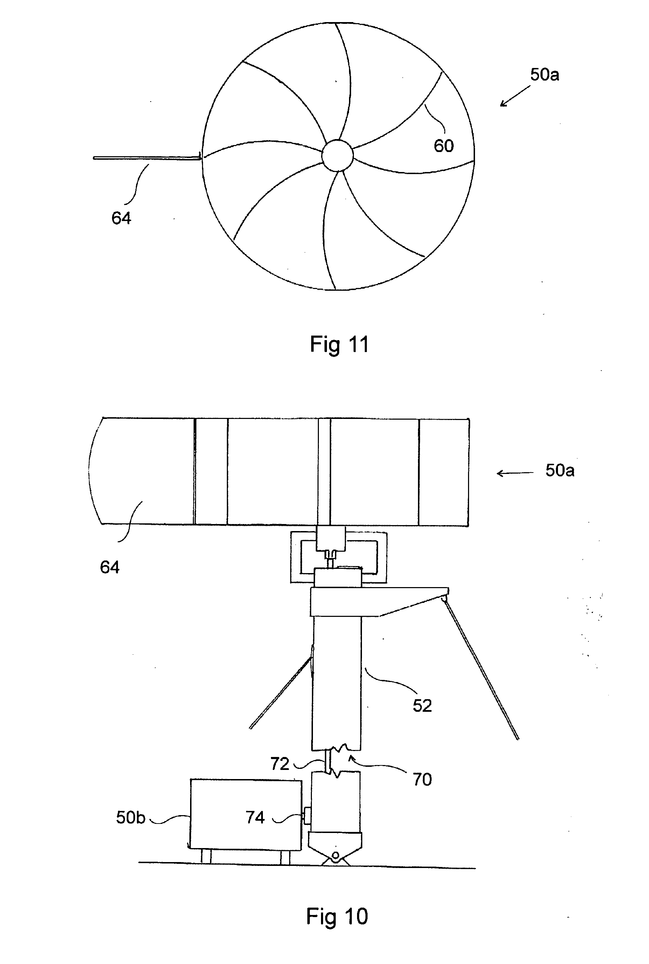

The preferred embodiment of the sailboat 10 illustrated in Fig. 1 a comprises a wind turbine 50a attached to the mast 52 of the sailboat 10. A generator 50 b is arranged on the sailboat 10, preferably at the bottom of the mast 52 above or below deck level. The wind turbine 50a and the generator 50b are in a driving connection, the rotation of the wind turbine 50a is passed on to the shaft of the generator 50b via known shaft connections. In order to simplify the driving connection the wind turbine 50a is preferably of a vertical axis design and it is preferably mounted on the top of the mast 52 and the driving shaft connection 72 between the wind turbine 50a and the wind generator 50b runs in the duct 70 of the mast (see Fig. 10).

The batteries 12 are electrically connected to the generator 50b - preferably with the interposition of the control unit - for charging the batteries 12.

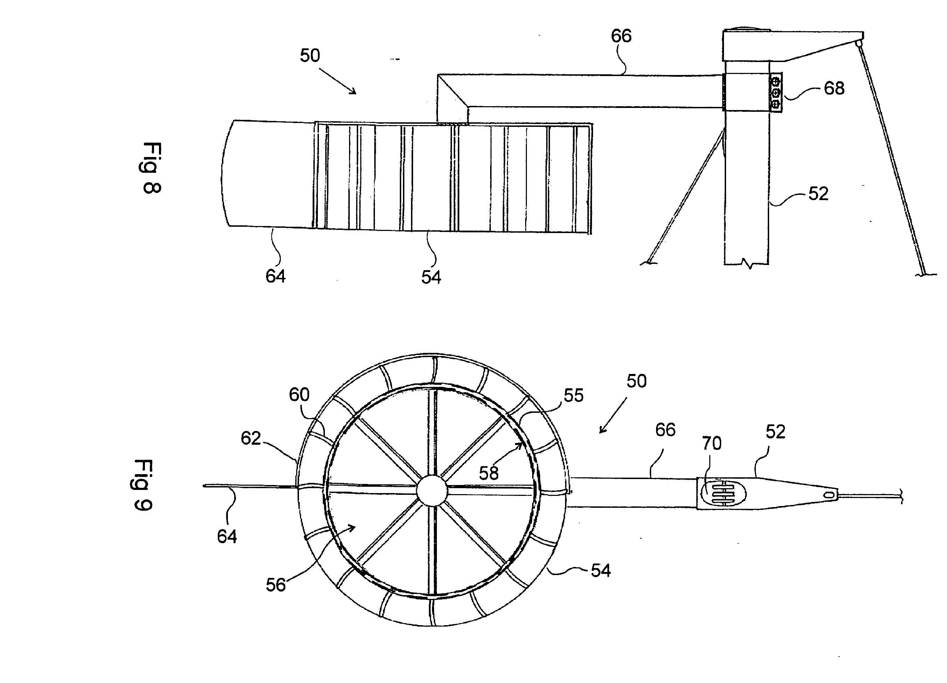

In the embodiment illustrated in Fig 1b the generator 50b and the wind turbine 50a are built together to form a wind generator 50, which may be arranged on a cantilever mounted on the top portion of the mast 52 as will be explained in connection with Fig. 8 and 9.

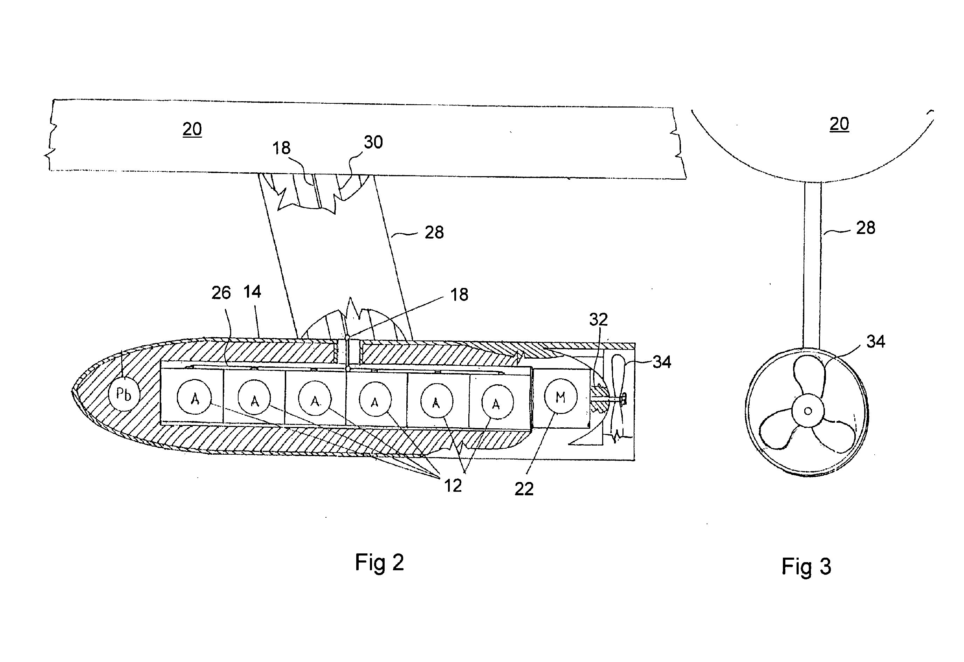

Figs 2 and 3 illustrate a preferred embodiment of the keel 14. As can be seen the keel 14 comprises a cavity 26 wherein six batteries 12 are sealed off. The keel 14 is supported by a console 28 having comprising a duct 30 for guiding the electrical wiring 18 of the batteries 12 to the control unit 16 arranged in a navigation area or compartment of the sailboat 10.

The batteries 12 are connected in series such that the first three and the second three batteries 12 form two groups respectively, which can be selectively by-passed when charging or discharging the batteries 12. Preferably the first group of three batteries 12 can be charged, while the second group of batteries 12 is being used to provide electricity to the electric motor 22. Preferably the control unit 16 monitors the charge of the batteries being charged and when the obtained voltage reaches a preset value the two groups are switched, whereby the first group of batteries 12 start to feed the electric motor 22, while the second group of batteries 12 is charged. Switching over can be performed in any known way, e.g. an alteration switch that can be triggered automatically or by the control unit 16.

If the battery voltage of both group of batteries 12 are above the preset value the charging current is preferably switched off, e.g. by a circuit breaker triggered automatically or controlled by the control unit 16.

It is also possible to selectively by-pass individual batteries 12 when they reach the preset battery voltage, e.g. an alteration switch can be used to take out the fully charged battery 12 of the serial connection and to switch the current over to a by-pass line.

In the embodiment illustrated in Figs 2 and 3 the electric motor 22 is also arranged in the cavity 26 of the keel 14 adjacent to the batteries 12. thus the electric wiring 18 of the motor 22 runs down from the control unit 16 through the duct 30 within the console 28 of the keel 14. The electric motor 22 is sealed-off within the cavity 26 together with the batteries 12. A driving shaft 32 connected to the motor 22 extends from the cavity 26 and a propeller 34 is mounted on the driving shaft 32 outside of the sealed-off cavity 26, such that when the sailboat 10 is put on water the propeller 34 is within the water and propels the sailboat 10 when the electric motor 22 is turned on.

The electric motor 22 may also act as a generator recharging the batteries 12 when the sailboat 10 is driven by the wind and the propeller 24 is forced to turn faster, whereby the motor 22 acting as a generator sends back electricity which can be used to recharge the batteries 12.

The keel 14 can be made of lead which is preferably contained in a steel casing 15.

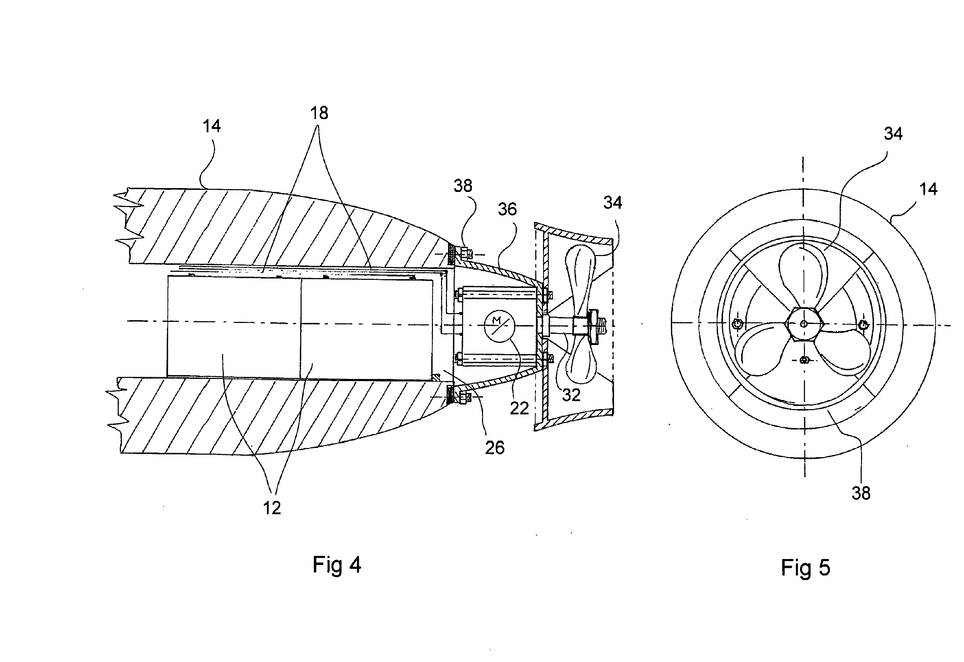

Figs. 4 and 5 illustrate an alternative embodiment wherein the electric motor 22 is housed in an end piece 36 which serves as an extension of the cavity 26 and at the same time seals-off the cavity 26. The end piece 36 can be adjoined to the keel 14 e.g. by self-sealing screws 38 having liquid sealing properties. A propeller house 40 is fitted to the end piece 36 such that the driving shaft 32 of the motor 22 extends from the end piece 36 into the propeller house 40 where the propeller 34 is connected to the driving shaft 32. Liquid seal is provided around the driving shaft 32 in order to prevent water entering the cavity 26.

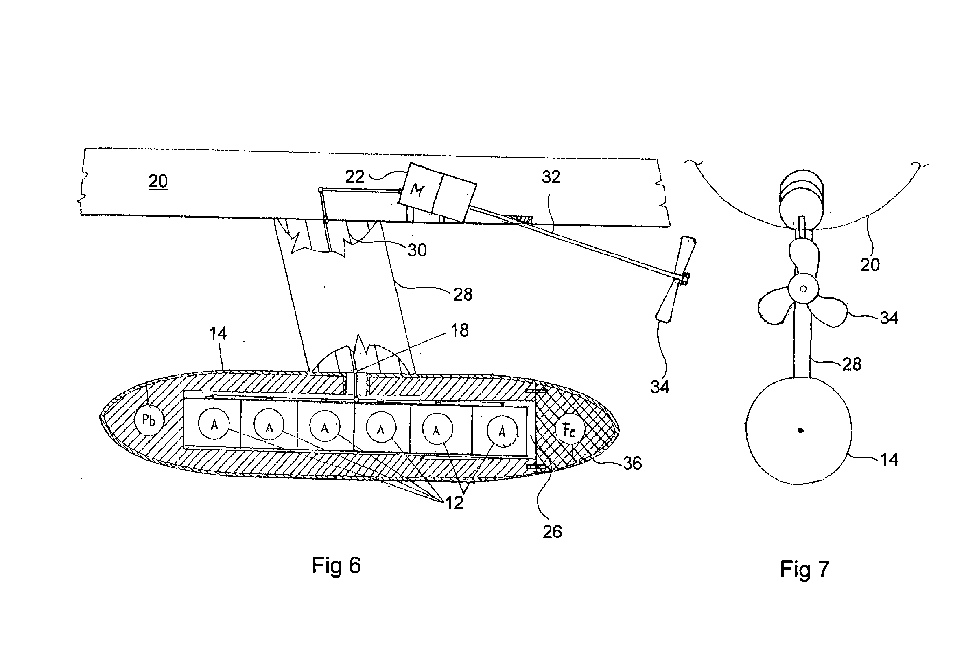

Figs 6 and 7 illustrate another preferred embodiment wherein the electric motor 22 is arranged in the hull 20 of the sailboat 10. In this case the driving shaft 32 transmitting the rotational force of the motor 22 to the propeller 34 extends from the hull 20 through a liquid tight sealing into the water such that when the sailboat 10 is put on water the propeller 34 is inside the water and able to propel the sailboat 10.

In this embodiment the cavity 16 of the keel 14 is sealed off by a massive iron or led end piece 36' which is preferably contained within a steel casing 15' as well.

Figs 8 and 9 illustrate a wind generator 50 comprising the wind turbine 50a and the generator 50b. The wind generator 50 is provided for recharging the batteries 12 in a particularly preferred embodiment of the invention. The wind turbine 50a of the wind generator 50 is preferably of a vertical axis design in order to minimise the resistance associated with changing the direction of the angular momentum of the rotating wind turbine 50 when the sailboat 10 is turning.

The wind turbine comprises a rotating rotor 54 and a stationary stator 56. The rotor 54 supports a plurality of coils 55, preferably at least 6 coils, even more preferably 12, 18 or 21 coils. The stationary stator 56 comprises a ring iron core 58 which is either a continuous iron ring or a discontinuous iron ring made up of a plurality of iron plates 58a arranged along the circumference of a ring as illustrated in Fig 9.

The rotor 54 of the wind generator 50 is provided with blades 60. The aerodynamic profile of the blades 60 allows the wind to exert force on the blades whereby the rotor 54 is forced to rotate around its vertical axis. The blades 60 may be of a straight design in which case the wind turbine preferably comprises a semi-cylindrical shield 62, which is rotatably mounted on the wind generator 50 for shielding half of the blades 60 from the wind. Thereby the torque exerted on the blades 60 at the open side of the wind generator 50 is not decreased by a counter-torque that would be exerted on the blades 60 of the shielded side. A passive wind vane 64 is attached to the semi-cylindrical shield 62 for aligning the shield 62 with respect to the wind direction.

The wind generator 50 is preferably made of carbon fibre composite (or a carbon kevlar composite) rendering the generator 50 ultra light. Furthermore, the stator 56 supporting the iron core 58 is preferably in the form of a hollow cylinder which is enforced by radial spokes 66 in order to further decrease the weight of the wind generator 50 while providing a large iron core surface for a correspondingly large rotor surface supporting a high number of coils 55.

The wind generator 50 is mounted on a cantilever 66 that is affixed to the mast 52 of the sailboat via a bracket 68 as illustrated in Fig. 8. The cantilever 66 is preferably also made of a carbon fibre composite in order to ensure the required strength and light weight at the same time.

The mast 52 of the sailboats 10 generally comprise an inner duct 70, which is suitable for guiding the electric wiring 18 of the wind generator 50 down from the top of the mast 52.

The wind generator 50 is electrically connected to the batteries 12 arranged within the cavity 26 of the keel 14 in order to provide charging current for charging the batteries 12. The control unit 16 is preferably interposed between the wind generator 50 and the batteries 12, whereby the charging of the batteries 12 may be controlled manually by an operator as well.

If the batteries 12 are fully charged or charging the batteries 12 is less important (e.g. when the sailboat 10 is docked in the harbour) the current provided by the wind generator 50 may be used to feed smaller electric appliances as well, for example small refrigerator, electric water heater, electric radiator, mobile telephone battery recharger, etc. The current may be switched over to the electric appliances automatically (e.g. via the control unit 16) when the charging of the batteries 12 stored in the keel 14 is complete, or a manual switch may be provided for allowing the user of the sailboat 10 to determine whether the batteries 12 or the electric appliances should be fed by the wind generator 50. It is also possible to divide the current supply of the wind generator 50 between the batteries 12 and certain electric appliances which require constant power supply, e.g. a refrigerator or an electric heater.

In the embodiment illustrated in Fig. 10 and 11 the wind generator 50 is made up of a separate wind turbine 50a and generator 50b. The wind turbine 50a is mounted on the top of the mast 52 of the sailboat 10, whereas the generator 50b is arranged on the sailboat 10, preferably at the bottom of the mast 52 above or below deck level. The wind turbine 50a and the generator 50b are in a driving connection which allows the rotation of the wind turbine 50a to be passed on to the shaft 74 of the generator 50b via known shaft connections 72. The driving shaft connection 72 between the wind turbine 50a and the wind generator 50b runs in the duct 70 of the mast.

The generator 50b can be any conventional type of generator, preferably having a power output of preferably about 0,5 kW to 8 kW depending on the size of the sailboat 10.

The wind turbine 50a is preferably made of a light material such as a carbon fibre composite e.g. a carbon kevlar composite.

The wind turbine 50a may be provided with a gyroscope in order to maintain its vertical position even if the sailboat 10 is tilted in the course of sailing. The angle of the wind turbine 50a with respect to the mast 52 can be simply chosen to compensate for any tilting of the sailboat 10 (and mast 52) via known electric drive means.

The invention is applied as follows.

All or part of the batteries 12 within the cavity 26 of the keel 14 are constantly being charged until they reach a predetermined voltage when the batteries 12 are cut off the charging circuit either as groups or independently.

Whenever additional propulsion is needed the user may switch all or part of the batteries 12 to power supply mode for providing the electric motor 22 with electricity. The electric motor 22 drives the propeller 24, which is mounted on the driving shaft 32 of the motor 22, whereby the sailboat 10 is propelled forward or backward depending on the actuation of the reverse gear 17. The propelling speed may be set too via the control unit 16 in a known way.

The electric motor 22 is anti-pollutional, moreover it is more quite than a diesel motor, whereby the electric motor 22 may be arranged within the hull 20 of the sailboat 10 without any inconvenience.

The batteries 12 are charged with the current generated by the wind turbine 50a mounted on the mast 52 of the sailboat 10. The location of the wind turbine 50a ensures that the generator 50b is almost constantly in operation as there is practically always some wind at the top of the mast 52. The generator 50b may be formed integrally with the wind turbine 50a, in which case it is also at the top of the mast 52, or it may be a separate device arranged on or below the deck level. Because the generator 50b is almost constantly in operation it can be used to charge the batteries 12 even when the sailboat 10 is docked in the harbour. The current supplied by the wind turbine 50a and the generator 50b may be used to feed smaller electric appliances once the batteries 12 have been charged or when the user wishes to do so.

It will be appreciated from the forgoing description that the teachings of the invention is easily applied on existing sailboats 10 as well. By replacing the conventional keel of a sailboat 10 by the hollow keel 14 according to the present invention, wherein the batteries 12 as well as the electric motor 22 may be accommodated the sailboat 10 can be propelled by an antipollutional propulsion means. In order to make use of green energy source a wind turbine 50a according to the invention may be mounted at the top of the mast 52 of the sailboat 10. The mast 52 of a conventional sailboat 10 comprises an inner duct 70 thus it is simple to arrange the driving shaft connection 72 between the wind turbine 50a and the generator 50b (Figs 10 and 11) within the mast, or to guide the electric wiring of the wind generator 50 (Figs 8 and 9) from the top of the mast 52 down to a control unit 16, which controls the charging of the batteries 12 as well as the operation of the electric motor 22.

The above-described embodiments are intended only as illustrating examples and are not to be considered as limiting the invention. Various modifications will be apparent to a person skilled in the art without departing from the scope of protection determined by the attached claims.

## Claims

1. Sailboat having a hull, a mast, a keel, **characterised in that** the sailboat is provided with an electric motor driven propeller, and the keel comprises an inner cavity wherein at least one battery is sealed off, and the battery is electronically connected to the electric motor.

2. The sailboat according to claim 1, wherein the at least one battery includes a plurality of such batteries connected in series such that the individual batteries or groups thereof can be selectively by-passed for selectively charging and discharging the individual batteries or groups thereof.

3. The sailboat according to claims 1 or 2, wherein the electric motor is arranged in the cavity of the keel, the electric motor is connected to the propeller via a driving shaft such that the driving shaft extends from the sealed-off cavity and the propeller is arranged outside of the sealed-off cavity.

4. The sailboat according to claims 1 or 2, wherein the electric motor is arranged in the hull of the sailboat and the electric motor is connected to the propeller via a driving shaft such that the driving shaft extends from the hull and the propeller is arranged outside of the hull.

5. The sailboat according to any of claims 1 or 4, wherein the keel is supported by a console wherein electrical wiring is provided for connecting the at least one battery with a control unit within or above the hull.

6. The sailboat according to any of claims 1 or 5, wherein a wind turbine is arranged on the mast, which is in driving connection with a generator arranged on the sailboat and the at least one battery is electrically connected to the generator allowing charging of the at least one battery.

7. The sailboat according to claim 6, wherein the wind turbine is of a vertical axis design.

8. The sailboat according to claim 6 or 7, wherein the generator and the wind turbine are built together to form a wind generator being mounted on the mast, the wind generator comprising a rotor and a stator, the rotor supports a plurality of coils and the stator is formed as a ring iron core.

9. Sailboat keel for housing at least one battery, wherein the keel comprises an inner cavity wherein at least one battery is sealed off, and the at least one battery can be electronically connected to an electric motor.

10. The sailboat keel according to claim 9, wherein the at least one battery includes a plurality of such batteries connected in series such that the individual batteries or groups thereof can be selectively by-passed for selectively charging and discharging the individual batteries or groups thereof.

11. The sailboat keel according to claims 9 or 10, wherein the electric motor is arranged in the cavity of the keel, the electric motor is connected to a propeller via a driving shaft such that the driving shaft extends from the sealed-off cavity and the propeller is arranged outside of the sealed-off cavity.
